# FASCICULE DE BREVET EUROPEEN

(11) **EP 2 500 213 B1**
(45) Date de publication et mention de la délivrance du brevet: **05.05.2021**
(21) Numéro de dépôt: 12001716.5
(22) Date de dépôt: 13.03.2012
(51) Int. Cl.: B60Q 1/04, B60Q 1/26

(54) **Dispositif d'éclairage et/ou de signalisation de véhicule automobile**
Vorrichtung zur Beleuchtung und/oder Signalisierung für Kraftfahrzeug
Lighting and/or signalling device of an automobile

(30) Priorité: 14.03.2011 FR 1152042
(43) Date de publication de la demande: 19.09.2012
(73) Titulaire: VALEO ILUMINACION, S.A., 23600 Martos Jaen (ES)
(72) Inventeur: Contreras Luque, Antonio, 23600 Martos (Jaen) (ES); Rubia Mena, Juan Antonio, 23600 Martos (Jaen) (ES); Gonzales de la Torre, Angel, 23600 Martos (Jaen) (ES)
(74) Mandataire: Valeo Systèmes d'Essuyage

(56) Documents cités:
- US-A- 5 360 282
- US-A1- 2002 145 881
- US-A1- 2007 236 954
- US-A1- 2008 186 729
- US-A1- 2010 202 155

## Description

L'invention concerne notamment un dispositif d'éclairage et/ou de signalisation pour véhicule automobile.

Il peut être envisagé de monter un dispositif de signalisation arrière sur un châssis de véhicule automobile à l'aide de pions prévus sur le boîtier du dispositif. Ces pions comportent une tête pivot qui vient s'insérer sur le châssis. Chaque pion est monté dans une cheminée sur l'extérieur du boîtier, à proximité d'un coin de celui-ci. Cette configuration est relativement encombrante du fait de l'étendue axiale de cette cheminée. Ceci est un inconvénient lorsque l'espace disponible pour le dispositif de signalisation sur le véhicule est réduit, pouvant rendre difficile, voire impossible, de prévoir dans le dispositif de signalisation un masque ou un réflecteur qui s'étend jusque dans un coin de celui-ci.

L'invention vise notamment à remédier à cet inconvénient

Il est connu de US 2008/186729 A1 un dispositif d'éclairage de véhicule automobile comprenant un boîtier, depuis l'intérieur duquel des éléments de fixation sont insérés afin de fixer un organe de montage sur le boîtier.

L'invention a ainsi pour objet un dispositif d'éclairage et/ou de signalisation, notamment pour véhicule automobile, comportant :
- un boîtier,
- au moins un organe de montage agencé pour permettre le montage du boîtier sur un châssis de véhicule automobile, cet organe de montage comprenant une cavité,
- un élément de fixation agencé pour permettre la fixation de l'organe de montage sur le boîtier par insertion de cet élément de fixation, au moins partiellement, dans la cavité de l'organe de montage,
l'élément de fixation étant inséré dans la cavité de l'organe de montage depuis l'intérieur du boîtier, et le boîtier comprenant un orifice pour le passage de l'élément de fixation, cet orifice du boîtier étant rendu étanche à l'aide d'un joint d'étanchéité et la cavité étant borgne.

Grâce à l'invention, il est possible de supprimer sur le boîtier la cheminée encombrante, et ainsi gagner en compacité.

De préférence, l'élément de fixation comporte une vis, et la cavité de l'organe de montage comporte un taraudage.

Le cas échéant, le boîtier comporte une paroi intérieure, cette paroi comprenant un compartiment, notamment délimité par une nervure sensiblement annulaire, pour recevoir au moins partiellement le joint d'étanchéité.

La nervure annulaire peut être circulaire ou rectangulaire par exemple.

Si on le souhaite, le boîtier comporte une paroi extérieure, cette paroi comprenant un logement, notamment délimité par une nervure annulaire, pour recevoir au moins partiellement l'organe de montage. Ce logement peut permettre de bloquer la rotation de l'organe de montage lors du vissage de la vis.

Dans un exemple de mise en oeuvre de l'invention, l'organe de montage comporte une tête, notamment pivotante, agencée pour être assemblée au châssis.

Avantageusement le dispositif comporte au moins un masque ou un réflecteur disposé dans une enceinte du boîtier, ce masque ou ce réflecteur s'étendant de préférence sensiblement jusqu'à un coin de l'enceinte du boîtier.

Par exemple, un bord de ce masque ou réflecteur est situé à moins de 2 cm, voire à moins de 1 cm, du coin en question.

Dans un exemple de mise en oeuvre de l'invention, l'organe de montage présente un axe longitudinal, et le masque ou le réflecteur coupe cet axe longitudinal.

De préférence, l'orifice du boîtier est en regard du masque ou du réflecteur.

Le dispositif peut être agencé pour remplir au moins une fonction photométrique prédéterminée, choisie parmi :
- un faisceau route,
- un faisceau de croisement,
- un feu DRL (Daytime Running Light),
- un indicateur de direction,
- une lampe ville,
- un feu stop,
- un anti-brouillard, etc...

Si on le souhaite, le dispositif est agencé en feu de signalisation, notamment en feu de signalisation arrière du véhicule.

L'invention pourra être mieux comprise à la lecture de la description détaillée qui va suivre, d'un exemple de mise en œuvre non limitatif de l'invention, et à l'examen du dessin annexé, sur lequel :
- la figure 1 représente, schématiquement et partiellement, en coupe, un dispositif conforme à un exemple de mise en oeuvre de l'invention, et
- les figures 2 et 3 représentent, schématiquement et partiellement, deux vues en perspective des différents éléments du dispositif de la figure 1.

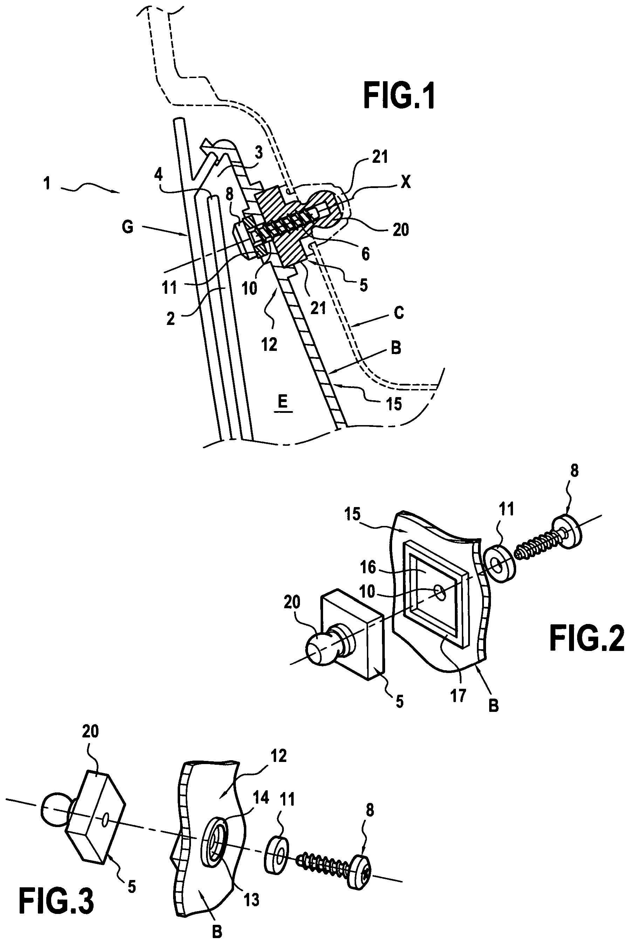

On a représenté sur la figure 1 un dispositif de signalisation 1 selon un exemple de mise en œuvre de l'invention.

Ce dispositif 1 comporte un boîtier B définissant avec une glace G, en matière plastique sensiblement transparente, une enceinte E.

Ce dispositif 1 comporte, dans l'enceinte E, une source de lumière non représentée, comportant par exemple une diode électroluminescente. Ce dispositif 1 sert, dans l'exemple décrit, de feu de signalisation arrière du véhicule.

Ce dispositif 1 comporte en outre un masque 2 disposé dans l'enceinte E. Ce masque sert par exemple à dissimuler certains composants à l'intérieur de l'enceinte E, et/ou à améliorer l'esthétique du dispositif 1.

Ce masque 2 s'étend sensiblement jusqu'à un coin 3 de l'enceinte E. Ainsi un bord 4 de ce masque peut par exemple être à moins de 2 cm, voire 1cm, du coin 3.

Le dispositif 1 comporte en outre :
- au moins un organe de montage 5 agencé pour permettre le montage du boîtier B sur un châssis C du véhicule automobile, cet organe de montage comprenant une cavité borgne 6,
- un élément de fixation 8 agencé pour permettre la fixation de l'organe de montage 5 sur le boîtier B par insertion de cet élément de fixation 8, au moins partiellement, dans la cavité 6 de l'organe de montage 5.

L'organe de montage 5 peut être réalisé par exemple en PA-GF ou PBT-GF .

L'élément de fixation 8 comporte une vis, et la cavité 6 de l'organe de montage comporte un taraudage pour coopérer avec la vis 8.

L'élément de fixation 8 est inséré dans la cavité 6 de l'organe de montage 5 depuis l'intérieur du boîtier B.

Le boîtier B comprend un orifice 10 pour le passage de l'élément de fixation 8.

Cet orifice 10 du boîtier est rendu étanche à l'aide d'un joint d'étanchéité 11.

Le boîtier B comporte une paroi intérieure 12, cette paroi 12 comprenant un compartiment 13, de forme circulaire, délimité par une nervure annulaire 14, pour recevoir au moins partiellement le joint d'étanchéité 11, comme illustré sur la figure 3.

Le boîtier B comporte en outre une paroi extérieure 15, cette paroi comprenant un logement 16 de forme carrée, délimité par une nervure annulaire 17, pour recevoir au moins partiellement l'organe de montage 5, comme visible sur la figure 2.

L'organe de montage 5 comporte une base 21 de section carrée et une tête 20, notamment pivotante, agencée pour être assemblée, par encliquetage, au châssis C, dans un renfoncement 21 de ce châssis C.

L'organe de montage 5 présente un axe longitudinal X (parallèle à la direction longitudinale du taraudage 6), et le masque ou le réflecteur 2 coupe cet axe longitudinal X, comme représenté sur la figure 1.

L'orifice 10 du boîtier B est en regard du masque ou du réflecteur 2.

## Revendications

1. Dispositif d'éclairage et/ou de signalisation (1), notamment pour véhicule automobile, comportant :
- un boîtier (B),
- au moins un organe de montage (5) agencé pour permettre le montage du boîtier sur un châssis (C) de véhicule automobile, cet organe de montage comprenant une cavité (6),
- un élément de fixation (8) agencé pour permettre la fixation de l'organe de montage sur le boîtier par insertion de cet élément de fixation, au moins partiellement, dans la cavité de l'organe de montage, l'élément de fixation étant inséré dans la cavité de l'organe de montage depuis l'intérieur du boîtier, et le boîtier comprenant un orifice (10) pour le passage de l'élément de fixation **caractérisé en ce que** l' orifice du boîtier est rendu étanche à l'aide d'un joint d'étanchéité (11), et **en ce que** la cavité (6) est borgne.

2. Dispositif selon la revendication précédente, **caractérisé en ce que** l'élément de fixation (8) comporte une vis, et la cavité de l'organe de montage comporte un taraudage.

3. Dispositif selon la revendication précédente, **caractérisé par le fait que** le boîtier comporte une paroi intérieure, cette paroi comprenant un compartiment (13), notamment délimité par une nervure annulaire, pour recevoir au moins partiellement le joint d'étanchéité.

4. Dispositif selon l'une des revendications précédentes, **caractérisé par le fait que** le boîtier comporte une paroi extérieure, cette paroi comprenant un logement (16), notamment délimité par une nervure annulaire, pour recevoir au moins partiellement l'organe de montage.

5. Dispositif selon l'une des revendications précédentes, **caractérisé par le fait que** l'organe de montage comporte une tête (20) agencée pour être assemblée au châssis.

6. Dispositif selon l'une des revendications précédentes, **caractérisé par le fait qu'**il comporte au moins un masque (2) ou un réflecteur disposé dans une enceinte du boîtier.

7. Dispositif selon la revendication précédente, l'organe de montage présentant un axe longitudinal, **caractérisé par le fait que** le masque ou le réflecteur coupe cet axe longitudinal (X).

8. Dispositif selon l'une des revendications précédentes, **caractérisé par le fait qu'**il est agencé en feu de signalisation, notamment en feu de signalisation arrière du véhicule.

## Patentansprüche

1. Vorrichtung zur Beleuchtung und/oder Signalisierung (1), insbesondere für ein Kraftfahrzeug, die Folgendes umfasst:
- ein Gehäuse (B),
- mindestens ein Montageorgan (5), das dazu angeordnet ist, die Montage des Gehäuses an einem Kraftfahrzeugrahmen (C) zu gestatten, wobei dieses Montageorgan einen Hohlraum (6) beinhaltet,
- ein Befestigungselement (8), das dazu angeordnet ist, die Befestigung des Montageorgans an dem Gehäuse durch mindestens partielles Einführen dieses Befestigungselements in den Hohlraum des Montageorgans zu gestatten, wobei das Befestigungselement von der Innenseite des Gehäuses aus in den Hohlraum des Montageorgans eingeführt wird und wobei das Gehäuse eine Öffnung (10) für den Durchgang des Befestigungselements beinhaltet,
**dadurch gekennzeichnet, dass** die Öffnung des Gehäuses mittels einer Dichtung (11) abgedichtet wird und dass der Hohlraum (6) ein Blindhohlraum ist.

2. Vorrichtung nach dem vorhergehenden Anspruch, **dadurch gekennzeichnet, dass** das Befestigungselement (8) eine Schraube umfasst und der Hohlraum des Montageorgans ein Innengewinde umfasst.

3. Vorrichtung nach dem vorhergehenden Anspruch, **dadurch gekennzeichnet, dass** das Gehäuse eine Innenwand umfasst, wobei diese Wand einen Abschnitt (13) beinhaltet, der insbesondere durch eine ringförmige Rippe begrenzt wird, um die Dichtung mindestens partiell aufzunehmen.

4. Vorrichtung nach einem der vorhergehenden Ansprüche, **dadurch gekennzeichnet, dass** das Gehäuse eine Außenwand umfasst, wobei diese Wand eine Aufnahme (16) beinhaltet, die insbesondere durch eine ringförmige Rippe begrenzt wird, um das Montageorgan mindestens partiell aufzunehmen.

5. Vorrichtung nach einem der vorhergehenden Ansprüche, **dadurch gekennzeichnet, dass** das Montageorgan einen Kopf (20) umfasst, der dazu angeordnet ist, an dem Rahmen befestigt zu werden.

6. Vorrichtung nach einem der vorhergehenden Ansprüche, **dadurch gekennzeichnet, dass** sie mindestens eine Blende (2) oder einen Reflektor umfasst, die/der in einem Raum des Gehäuses eingerichtet ist.

7. Vorrichtung nach dem vorhergehenden Anspruch, wobei das Montageorgan eine Längsachse aufweist, **dadurch gekennzeichnet, dass** die Blende oder der Reflektor diese Längsachse (X) schneidet.

8. Vorrichtung nach einem der vorhergehenden Ansprüche, **dadurch gekennzeichnet, dass** sie als Lichtsignaleinrichtung, insbesondere als hintere Lichtsignaleinrichtung des Fahrzeugs angeordnet ist.

## Claims

1. Lighting and/or signalling device (1), notably for a motor vehicle, comprising:
- a housing (B),
- at least one mounting member (5) arranged to allow the housing to be mounted on a motor vehicle chassis (C), this mounting member comprising a cavity (6),
- a fixing element (8) arranged to allow the mounting member to be fixed onto the housing by the insertion of this fixing element, at least partially, into the cavity of the mounting member,
the fixing element being inserted into the cavity of the mounting member from the inside of the housing, and the housing comprising an orifice (10) for the passage of the fixing element,
**characterized in that** the orifice of the housing is made seal-tight using a seal (11), and
**in that** the cavity (6) is blind.

2. Device according to the preceding claim, **characterized in that** the fixing element (8) comprises a screw, and the cavity of the mounting member comprises a tapping.

3. Device according to the preceding claim, **characterized in that** the housing comprises an inner wall, this wall comprising a compartment (13), notably delimited by an annular rib, for at least partially receiving the seal.

4. Device according to one of the preceding claims, **characterized in that** the housing comprises an outer wall, this wall comprising a recess (16), notably delimited by an annular rib, for at least partially receiving the mounting member.

5. Device according to one of the preceding claims, **characterized in that** the mounting member comprises a head (20) arranged to be assembled on the chassis.

6. Device according to one of the preceding claims, **characterized in that** it comprises at least a mask (2) or a reflector disposed in an enclosure of the housing.

7. Device according to the preceding claim, the mounting member having a longitudinal axis, **characterized in that** the mask or the reflector cuts this longitudinal axis (X).

8. Device according to one of the preceding claims, **characterized in that** it is arranged as an indicator light, notably a rear signalling light of the vehicle.
